## Europäisches Patentamt

## European Patent Office

## Office européen des brevets

(19)

(11) Publication number: **0 025 556**
**B1**

# EUROPEAN PATENT SPECIFICATION

(12)

(45) Date of publication of patent specification: **21.03.84**

(51) Int. Cl.³: **B 60 R 19/08**

(21) Application number: **80105255.6**

(22) Date of filing: **03.09.80**

(54) An impact absorbing bumper unit for a vehicle.

(30) Priority: **12.09.79 JP 125048/79 U**

(43) Date of publication of application:
**25.03.81 Bulletin 81/12**

(45) Publication of the grant of the patent:
**21.03.84 Bulletin 84/12**

(84) Designated Contracting States:
**DE FR GB**

(56) References cited:
**DE - A - 2 751 077**
**FR - A - 2 402 551**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Watanabe, Koji**
**No. 3-4-1, Konan-cho**
**Musahino City (JP)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Courier Press, Leamington Spa, England.

An impact absorbing bumper unit for a vehicle

The invention is related to an impact absorbing bumper unit for a vehicle, said bumper unit having a bumper reinforcing member secured to a vehicle body, an impact absorbing member disposed between said bumper reinforcing member and a bumper cover, which bumper cover is arranged to cover said impact absorbing member and is held by mounting means on said bumper reinforcing member, which mounting means is arranged to allow a portion of said bumper cover a displacement in the longitudinal direction of the vehicle toward said bumper reinforcing member when an external force caused by a collision of the vehicle is applied to said bumper unit.

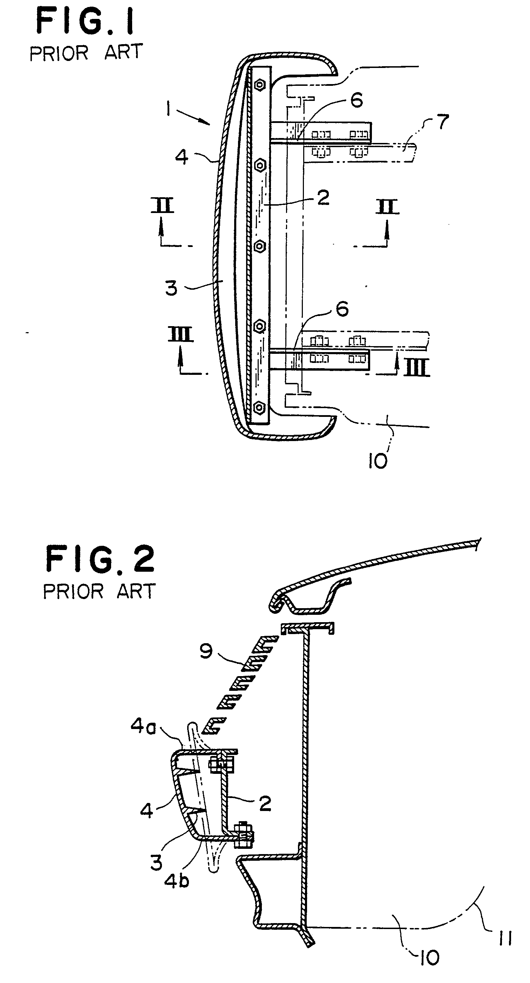

Referring first to Figures 1 to 3, a brief reference will be made to a conventional construction of a vehicle bumper unit which is here depicted as a front bumper by way of example. A front bumper unit generally denoted by reference numeral 1 comprises a bumper reinforcing member 2, an impact absorbing member 3 and a bumper cover 4. The bumper reinforcing member 2 is secured by means of bolts to bumper stays 6 which is fixed to side members 7 of a vehicle body. On the front side of the bumper reinforcing member 2 there is placed the impact absorbing member 3, and the surface of the impact absorbing is covered with the bumper cover 4. Upper and lower flange sections 4a and 4b of the bumper cover 4 are fastened by means of bolts to upper and lower sections 2a and 2b of the bumper reinforcing member 2, respectively.

Thus, in a conventional vehicle bumper unit, the upper and lower flange sections 4a and 4b of the bumper cover 4 are integrally and rigidly fastened to the upper and lower sections 2a and 2b of the bumper reinforcing member 2. With such a conventional construction, the bumper cover 4 and the impact absorbing member 3 are deformed largely in the vertical direction when the bumper unit 1 absorbs impact energy in a light collision of the vehicle, so that the bumper cover 4 and the impact absorbing member 3 come into contact with a radiator grille 9 or other vehicle body members, thus to cause damage to these vehicle body members. Moreover, because of the large deformation of the bumper cover, there occur cracks in the fastening portions of the bumper cover 4, so that the bumper cover must be renewed always after a light collision.

Furthermore, with such a conventional construction of a vehicle bumper, the bumper reinforcing member 2 must be installed on the vehicle body from the inside of a wheel housing portion 11 of a front fender 10, and therefore the installation of the bumper unit is very troublesome.

An impact absorbing bumper unit for a vehicle as described at the beginning of this description is known from the DE—A1—2751 077. As follows from this reference, the impact absorbing member disposed between the bumper reinforcing member and a bumper cover has to be disposed such that it fills completely the space between these two parts. Since this space has to be completely filled, quite a large amount of impact absorbing material is necessary. Such an impact absorbing material is normally made of some plastic or plastic foam material and is therefore relatively expensive. Furthermore, special fastening means are necessary for fastening the end portions of the bumper cover to the vehicle. Since these fastening means are not sufficient for the bumper cover, additional means are provided to hold the bumper cover on the reinforcing member, to achieve the stability required. The impact absorbing properties of this known bumper unit are determined by the material and the shape of the bumper cover, and by the characteristics of the elastic material and the shape and material of the bumper reinforcing member. Therefore, it is difficult to control the impact absorption properties.

The object of the invention consists therefore in improving an impact absorbing bumper unit according to the generic portion of claim 1 such that it has a simple construction and that the impact absorption properties may be better controlled.

This object is achieved in accordance with the invention by the features comprised of the characterizing clause of claim 1.

The impact absorbing bumper unit according to the invention has an extremely simple construction.

The impact absorbing characteristics of the bumper unit according to the invention are determined by the shape and the characteristics of the material of the bumer cover and by the shape and the characteristics of the material of the bumper reinforcing member. A further parameter of the impact absorbing characteristics depends on the material and the shape of the impact absorbing member disposed between the bumper cover and the bumper reinforcing member.

The bumper unit according to the invention has an additional parameter determining the overall impact absorbing characteristics of the bumper unit. This additional parameter is the possibility of a sliding movement between the bumper cover and the bumper reinforcing member. In the case of an impact acting on the bumper unit, the bumper cover moves toward the bumper reinforcing member absorbing thereby a certain amount of impact energy. According to the invention the mounting means for the bumper cover are not only used to fasten the bumper cover but also to provide impact energy absorbing properties. The bumper cover disclosed in the aforementioned DE—A1—2751077 is fixedly mounted by special mounting means to the vehicle. The holding means in the form of a bolt and a screw are not used to fasten the cover but rather to hold it for a slidable movement in the direction of the vehicle.

The impact absorbing bumper unit according to the invention is arranged not to be deformed in the vertical direction in a collision of the vehicle so that damages to a radiator grille or other vehicle body members are prevented. Furthermore, the occurrence of cracks in fastening portions between the bumper cover and the bumper reinforcing member of such a bumper unit is prevented.

A further development of the invention is characterized in that said bumper cover is fastened to said bumper reinforcing member in such a manner that there is provided a clearance between said impact absorbing member and the outer face of said bumper reinforcing member for allowing said bumper cover and said impact absorbing member to slightly move toward said bumper reinforcing member when an external force caused by a collision of the vehicle is applied to said bumper unit.

An advantageous embodiment of the invention will now be described in more detail with reference to the drawings.

Fig. 1 is a horizontal sectional view of a front bumper unit showing a conventional mounting construction of a bumper reinforcing member and a bumper cover.

Fig. 2 is a sectional view taken along the line II—II of Fig. 1.

Fig. 3 is a sectional view taken along the line III—III of Fig. 1.

Fig. 4 is a horizontal sectional view of a front bumper unit showing a mounting construction of a bumper reinforcing member and a bumper cover according to one embodiment of the present invention.

Fig. 5 is a sectional view taken along the line V—V of Fig. 4.

Fig. 6 is a sectional view taken along the line VI—VI of Fig. 4.

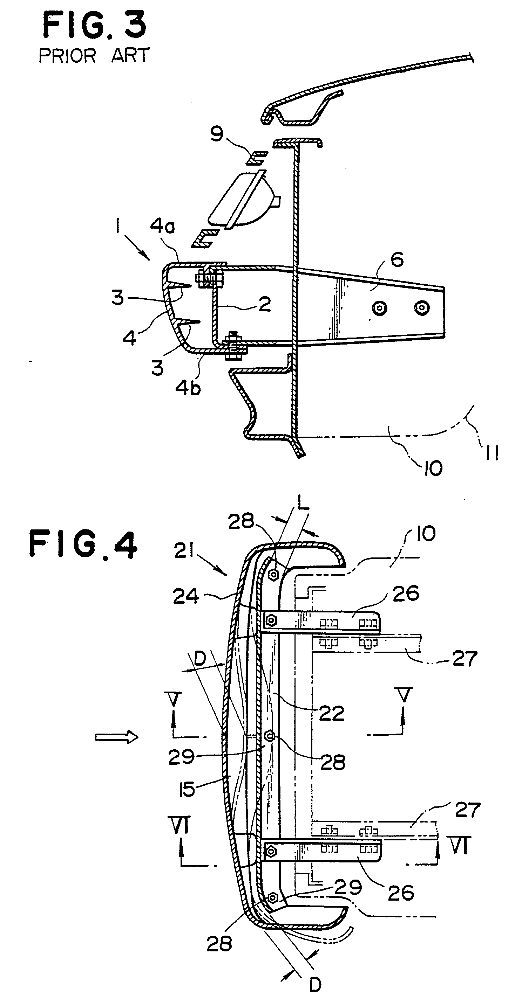

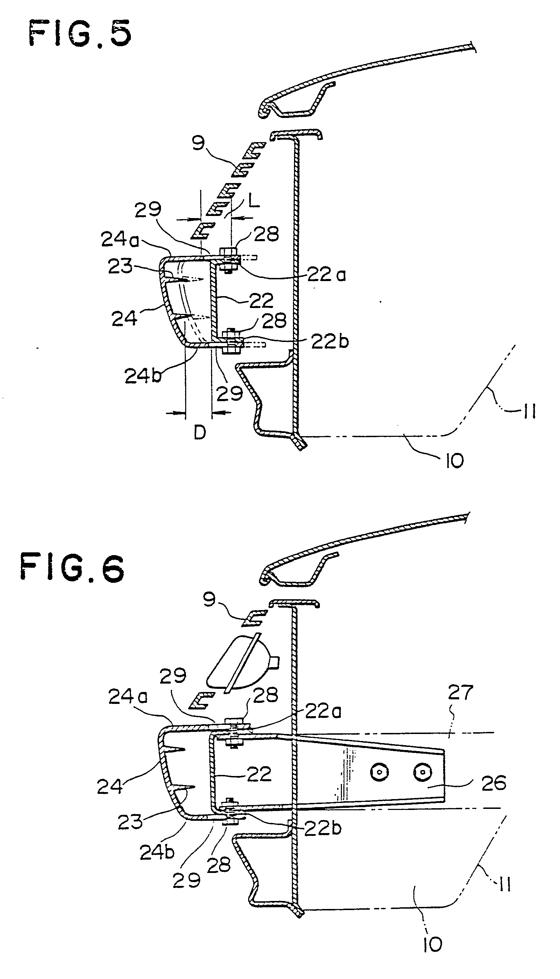

Reference to Figures 4 to 6, a front bumper unit according to the present invention is generally denoted by reference numeral 21, and the front bumper unit 21 comprises a bumper reinforcing member 22 which is fixed by means of bolts to bumper stays 26 which are in turn fixed to front side members 27 of a vehicle body, an impact absorbing member 23 disposed in front of the bumper reinforcing member 22, and a bumper cover 24 covering the surface of the impact absorbing member 23. The bumper cover 24 generally has upper and lower plate sections 24a and 24b extending longitudinally of the vehicle. The bumper reinforcing member 22 generally has upper and lower sections 22a and 22b. The upper and lower plate sections 24a and 24b of the bumper cover 24 are fastened by means of bolts 28 to the upper and lower sections 22a and 22b of the bumper reinforcing member 22. In the right and left side portions and near the middle portion of the upper and lower plate sections 24a and 24b of the bumper cover 24, there are formed elongate holes or slots 29 elongated longitudinally of the vehicle and the length L of the elongate holes is made slightly longer than a distance for movement D which is formed between the impact absorbing member 23 of the bumper cover 24 and the front side of the bumper reinforcing member 22. This distance for movement D allows the bumper cover 24 to move rearwards through the distance D when the bumper cover 24 and the impact absorbing member 23 absorb and dissipate impact energy in a light collision, and thus serves to prevent a large deformation in the vertical direction of the bumper cover 24 and the impact absorbing member 23 as well as to prevent occurrence of cracks in the surface of the bumper cover 24.

The bumper unit of the present invention is assembled as follows: Before vehicle body coating operation, the bumper reinforcing member 22 of the bumper unit 21 is fastened by means of bolts to the bumper stays 26 which are fixed to the front side members 27 of the vehicle body. Then after the body coating operation, the impact absorbing member 23 and the bumper cover 24 are fastened to the bumper reinforcing member 22 by means of bolts. The bumper cover 24 is fastened to the bumper reinforcing member 22 in such a manner that the fastening bolts therebetween are positioned at the rear end of the elongate hole elongated longitudinally of the vehicle and therefore there is formed between the front surface of the bumper reinforcing member 22 and the impact absorbing member 23 a distance D slightly shorter than the length L of the elongate holes. When an external force as shown in Fig. 4 is applied to the front bumper unit 21 arranged in this way, the bumper unit 21 is deformed as shown by phantom lines in Fig. 4. That is, the portion of the front bumper unit near the center of the vehicle width slides along the elongate holes toward the vehicle. However the front bumper unit of the present invention is not deformed in the vertical direction.

Although, in the embodiment mentioned above, a front bumper is taken as an example, the present invention is, of course, applicable also to a rear bumper. And the elongate holes 29 are formed on the side of the bumper cover 24 but these elongate holes may be formed in the upper and lower sections of the bumper reinforcing member 22. Furthermore whether the bumper cover 24 and the impact absorbing member 23 are formed integrally or separately is not important to the present invention.

According to the present invention, as will be understood from the foregoing description, either in the upper and lower sections of the bumper reinforcing member 22, or in the upper and lower plate sections of the bumper cover 24, there are provided elongate holes for allowing a movement of the bumper cover during a collision of the vehicle. Therefore the bumper unit of the present invention is not deformed in the vertical direction and does not cause damages to a radiator or other vehicle body members. The bumper unit of the present invention is free from cracks after deformed in a collision and therefore the deformed bumper unit is easily restored to the original state.

Furthermore the bumper cover is mounted on the bumper reinforcing member by fastening them by means of bolts at the upper and lower sections of the bumper reinforcing member. Therefore the bumper reinforcing member can be installed before a body coating operation and then, after the body coating operation, the bumper cover and the impact absorbing member can be installed. As a result, a rust prevention process for the bumper reinforcing member becomes unnecessary and the mounting operation is made very easy because the bumper reinforcing member can be installed on the bumper stays before the installation of the front fender.

## Claims

1. An impact absorbing bumper unit for a vehicle, said bumper unit (21) having a bumper reinforcing member (22) secured to a vehicle body (27), an impact absorbing member (23) disposed between said bumper reinforcing member (22) and a bumper cover (24), which bumper cover (24) is arranged to cover said impact absorbing member (23) and is held by mounting means (28, 29) on said bumper reinforcing member (22), which mounting means (28) is arranged to allow a portion of said bumper cover (24) a displacement in the longitudinal direction of the vehicle toward said bumper reinforcing member (22) when an external force caused by a collision of the vehicle is applied to said bumper unit (21), characterized in that said mounting means comprises at least one slot (29) formed in said bumper cover (24) or in said reinforcing member (22) and extending logitudinally of the vehicle and a bolt (28) which is inserted through said slot (29) to fasten said bumper cover (24) to said bumper reinforcing member (22) in such a position that a clearance remains between the appropriate end of said slot (29) and said bolt (28) to allow an inward sliding movement of said bumper cover (24) toward said bumper reinforcing member (22).

2. An impact absorbing bumper unit according to claim 1, characterized in that said bumper cover (24) is fastened to said bumper reinforcing member (22) in such a manner that there is provided a clearance between said impact absorbing member (23) and the outer face of said bumper reinforcing member (22) for allowing said bumper cover (24) and said impact absorbing member (23) to slightly move toward said bumper reinforcing member (22) when an external force caused by a collision of the vehicle is applied to said bumper unit (21).

## Revendications

1. Pare-choc absorbant les impacts pour un véhicule, ledit pare-choc (1) ayant un organe de renforcement (22) du pare-choc fixé à une carrosserie (27) du véhicule, un organe (23) absorbant les impacts disposé entre ledit organe renforçant le pare-choc (22) et un recouvrement (24) du pare-choc, lequel recouvrement du pare-choc (24) est agencé pour couvrir ledit organe absorbant les impacts (23) et est maintenu par un moyen de montage (28, 29) sur ledit organe de renforcement (22) du pare-choc, lequel moyen de montage (28) est agencé pour permettre à une partie dudit recouvrement (24) du pare-choc un déplacement en direction longitudinale du véhicule vers ledit organe de renforcement du pare-choc (22) quand une force externe provoquée par une collision du véhicule est appliquée audit pare-choc (21), caractérisé en ce que ledit moyen de montage comprend au moins une fente (29) formée dans ledit recouvrement (24) du pare-choc ou dans ledit organe de renforcement (22) et s'étendant longitudinalement au véhicule et un boulon (28) qui est inséré à travers ladite fente (29) pour fixer ledit recouvrement (24) du pare-choc audit organe de renforcement (22) du pare-choc en une position telle qu'il reste un jeu entre l'extrémité appropriée de ladite fente (29) et ledit boulon (28) pour permettre un mouvement coulissant vers l'intérieur dudit recouvrement (24) du pare-choc vers ledit organe de renforcement (22) du pare-choc.

2. Pare-choc absorbant les impacts selon la revendication 1, caractérisé en ce que ledit recouvrement (24) du pare-choc est fixé audit organe de renforcement (22) du pare-choc de façon qu'il y ait un jeu entre ledit organe absorbant les impacts (23) et la face externe dudit organe renforçant le pare-choc (22) pour permettre audit recouvrement du pare-choc (24) et audit organe absorbant les impacts (23) de se déplacer légèrement vers ledit organe de renforcement du pare-choc (22) quand une force externe due à une collision du véhicule est appliquée audit pare-choc (21).

## Patentansprüche

1. Stoßabsorbierende Stoßstange für ein Fahrzeug, welche Stoßstange (21) einen an einem Fahrzeugaufbau (27) befestigten Stoßstangen-Verstärkungsteil (22) und einen stoßabsorbierenden Teil (23) aufweist, der zwischen genanntem Stoßstangen-Verstärkungsteil (22) und einer Stoßstangenabdeckung (24) angeordnet ist, welche Stoßstangenabdeckung (24) zum Abdecken des genannten stoßabsorbierenden Teils (23) angeordnet und von Halterungsmitteln (28, 29) an genanntem Stoßstangen-Verstärkungsteil (22) gehalten ist, welche Halterungsmittel (28) angeordnet sind, um einen Teil der genannten Stoßstangenabdeckung (24) eine Verschiebung in der Längsrichtung des Fahrzeuges auf den genannten Stoßstangen-Verstärkungsteil (22) zu zu ermöglichen, wenn eine durch einen Zusammenstoß des Fahrzeuges hervorgerufene äußere Kraft auf die genannte Stoßstange (21) wirkt, dadurch gekennzeichnet, daß die genannten Halterungsmittel wenigstens einen in der genannten Stoßstangenabdeckung (24) oder im genannten Verstärkungsteil (22) geformten und sich längs des Fahrzeuges erstreckenden Schlitz (29) une einen Bolzen (28) aufweisen, der durch den genannten Schlitz (29) durchgesetzt ist, um die genannte Stoßstangenabdeckung (24) an dem genannten Stoßstangen-Verstärkungsteil (22) in einer derartigen Position zu befestigen, daß ein Spielraum zwischen dem betreffenden Ende des genannten Schlitzes (29) und genanntem Bolzen (28) verbleibt, um eine nach innen gerichtete Gleitbewegung der genannten Stoßstangenabdeckung (24) auf den genannten Stoßstangen-Verstärkungsteil (22) zu zu ermöglichen.

2. Stoßabsorbierende Stoßstange nach Anspruch 1, dadurch gekennzeichnet, daß die genannte Stoßstangenabdeckung (24) an genanntem Stoßstangen-Verstärkungsteil (22) in solch einer Weise befestigt ist, daß ein Spielraum zwischen genanntem stoßabsorbierenden Teil (23) und der Außenfläche des genannten Stoßstangen-Verstärkungsteil (22) geschaffen ist, um es der genannten Stoßstangenabdeckung (24) und genanntem stoßabsorbierenden Teil (23) zu ermöglichen, sich etwas auf den genannten Stoßstangen-Verstärkungsteil (22) zu zu bewegen, wenn eine durch einen Zusammenstoß des Fahrzeuges hervorgerufene äußere Kraft auf die geannte Stoßstange (21) einwirkt.

0 025 556

# FIG. 1
PRIOR ART

# FIG. 2
PRIOR ART

1

# FIG. 3
PRIOR ART

# FIG. 4

2

# FIG.5

# FIG.6